# EUROPÄISCHE PATENTSCHRIFT

(11) **EP 1 411 346 B1**
(45) Veröffentlichungstag und Bekanntmachung des Hinweises auf die Patenterteilung: **11.10.2006**
(21) Anmeldenummer: 03023322.5
(22) Anmeldetag: 15.10.2003
(51) Int. Cl.: G01N 21/86, G01N 33/52

(54) **Verfahren zur Erkennung und Kompensation der Unterdosierung von Teststreifen**
Method for detection and compensation of the underdosage of test strips
Procédé de détection et compensation d'un dosage insuffisant des bandes de test

(30) Priorität: 18.10.2002 DE 10248555
(43) Veröffentlichungstag der Anmeldung: 21.04.2004
(73) Patentinhaber: Roche Diagnostics GmbH, 68305 Mannheim (DE); F. HOFFMANN-LA ROCHE AG, 4070 Basel (CH)
(72) Erfinder: Pachl, Rudolf, Dr., 67158 Ellerstadt (DE); Hoenes, Joachim, Dr., 64673 Zwingenberg (DE)
(74) Vertreter: Jung, Michael

(56) Entgegenhaltungen:
- EP-A- 0 816 849
- US-B1- 6 312 888

## Beschreibung

Die Erfindung betrifft ein Verfahren zur Erkennung einer Unterdosierung eines analytischen Testelements und gegebenenfalls zur Kompensation der Unterdosierung. Weiterhin betrifft die Erfindung ein analytisches System sowie ein Testelement, die zur Erkennung einer Unterdosierung geeignet sind.

Bei den heutigen Analysemethoden stellt die photometrische Auswertung von analytischen Testelementen eines der gebräuchlichsten Verfahren zur schnellen Bestimmung der Konzentration von Analyten in Proben dar. Allgemein werden Photometrische Auswertungen im Bereich der Analytik, der Umweltanalytik und vor allem im Bereich der medizinischen Diagnostik eingesetzt. Insbesondere im Bereich der Blutglukosediagnostik aus Kapillarblut besitzen Testelemente, die photometrisch ausgewertet werden, einen großen Stellenwert.

Ein allgemeiner Trend bei der Durchführung analytischer Tests ist es, die Probenmengen zu reduzieren. Dies liegt häufig darin begründet, dass nur geringe Probenmengen vorhanden sind. Beispielsweise im Bereich der Blutzuckerbestimmung entnimmt sich der Diabetiker selbst einen Blutstropfen aus der Fingerbeere. Eine Verringerung der für den Test notwendigen Blutmenge kann dazu beitragen, dass die Blutprobengewinnung für die zu untersuchende Person weniger schmerzhaft ist. Dies liegt vor allem daran, dass der Stich zur Blutgewinnung bei kleinem Probenvolumenbedarf weniger tief gewählt werden kann als bei größerem Probenvolumenbedarf.

Verbunden mit einer Reduktion der Probenmengen ist eine Verkleinerung der Testelemente und insbesondere der Nachweiszonen, in denen die eigentliche Reaktion der Probe mit den Analyten abläuft. Es hat sich jedoch herausgestellt, dass für photometrisch auszuwertende Testelemente eine beliebige Verkleinerung der Nachweiszonen nicht praktikabel ist, da für eine zuverlässige Analytkonzentrationsbestimmung die Größe der photometrisch untersuchten Fläche eine wichtige Rolle spielt. Weiterhin ist wichtig, dass die photometrisch untersuchte Fläche der Nachweiszone möglichst vollständig und möglichst homogen von der Probe benetzt ist. Gerade mit kleinen Probenvolumina ist dies jedoch oft nicht von vorneherein sicherzustellen. Deshalb ist es wichtig zu erkennen, ob bei der jeweiligen Messung tatsächlich genügend Probenmaterial vorhanden ist und/oder ob das Probenmaterial zu einer flächenhomogenen Färbung der Nachweiszone geführt hat.

Bei den derzeit kommerziell erhältlichen, für das sogenannte "Home-Monitoring" konzipierten photometrischen Blutzuckertestsystemen, die in aller Regel aus einem Reflexionsphotometer und dazu passenden Blutzuckertestelementen ("Teststreifen") bestehen, erfolgt die Erkennung einer eventuellen Unterdosierung der Nachweiszone des Teststreifens entweder visuell durch den Benutzer (wie dies beispielsweise bei den Produkten "Glucotouch®" von Lifescan, Inc. oder "Accutrend®" von Roche Diagnostics GmbH der Fall ist) oder durch den Vergleich der Remissionswerte, die durch Messung der Remission für zwei oder mehr eng beieinanderliegende oder teilweise überlappende Zonen der Nachweiszone ("Leuchtflecke") erhalten werden (vgl. hierzu z. B. EP-A 0 819 943 und das Produkt "Glucotrend®" von Roche Diagnostics GmbH).

Bei der Methode der visuellen Kontrolle durch den Benutzer obliegt es diesem, zu entscheiden, ob die Kriterien für eine ausreichende Benetzung des Nachweisfeldes erfüllt sind oder nicht. Insbesondere bei sehbehinderten Personen kann dies unter Umständen zu Fehlmessungen bei unterdosiertem Teststreifen führen. Bei kleineren benötigten Volumina und damit kleineren Flächen stößt die visuelle Überprüfung der dosierten Probenmenge auch bei normalsichtigen Personen an ihre Grenzen.

Durch die Methode des Vergleichs zweier oder mehrerer nebeneinanderliegender oder teilweise überlappender Leuchtflecken kann eine sehr zuverlässige Unterdosierungserkennung realisiert werden. Die erkannte Unterdosierung führt aber stets dazu, dass bei unterdosierten Testelementen vom Messgerät kein Messergebnis ausgegeben wird. Außerdem führen zwei oder mehr nebeneinander liegende Leuchtflecke im Vergleich zu einem Leuchtfleck zwangsläufig zu einer Vergrößerung der Fläche, die von Probenflüssigkeit bedeckt sein muss, und somit zu einer Vergrößerung des notwendigen Probenvolumens.

Im Dokument US 5,114,350 wird vorgeschlagen, zur Erkennung und Kontrolle des Benetzungsgrades der Nachweiszone eines Testelements, die durch die Benetzung mit Probenflüssigkeit verursachte zunehmende Transparenz und somit abnehmende Remission der Nachweiszone, zu bestimmen. Dazu wird zunächst die trockene, unbenetzte Nachweiszone beleuchtet und die Remission apparativ erfasst. Durch die Benetzung des Testelementes erfolgt eine Abnahme der Remission bzw. des gemessenen Remissionswertes, bis der Remissionswert bei vollständiger Benetzung einen Plateauwert erreicht. Wird das Plateau der Remission von einer Kontrolleinheit registriert, wird die Probenaufgabe zu dem Testelement unterbrochen. Nach Detektion der Probenmenge wird mittels der selben Optik ein Remissionswert des Testelementes vermessen, der sich durch eine analytabhängige Farbstoffbildung ergibt. Ist die Reaktion eines Analyten mit einem farbstoffbildenden Reagenz abgeschlossen, erreicht die analytabhängige Remissionsänderung ebenfalls einen Plateauwert.
Die Analytkonzentration wird mittels des analytabhängigen Remissionswertes (Plateauwert) errechnet, wobei der Plateauwert, der bei vollständiger Benetzung des Testelementes gemessen wird, mit berücksichtigt wird. Eine Berechnung der Analytkonzentration erfolgt somit unter Bezugnahme auf das aufgegebene Probenvolumen. Hat keine vollständige Benetzung stattgefunden, erlaubt das Maß der Abnahme der Remission, eine Unterdosierung des Nachweiselements zu erkennen und die tatsächlich vorhandene Probenmenge zu bestimmen.

Zum Messen der Remissionsänderung, die durch die Befeuchtung der Nachweiszone des Testelements verursacht wird, sowie zum Messen der analytabhängigen Remissionsänderung wird ein optischer Aufbau verwendet, der für die jeweiligen Messungen über dieselbe Strahlungsquelle, Strahlengang und Detektor verfügt. Dies hat zur Folge, dass eine Konzentrationsbestimmung des Analyten nur mittels mehrfach hintereinanderfolgenden Messungen möglich ist, sodass die Bestimmung des jeweiligen Plateauwertes möglich wird.

Dies setzt weiterhin voraus, dass das System z. B. so beschaffen ist, dass eine Unterbrechung der Probenzufuhr bei Erreichen des ersten Plateauwertes gewährleistet werden kann.

Messverfahren sowie Aufbau der Vorrichtung erweisen sich folglich als Aufwendig und kompliziert.

Aus dem Dokument WO-A 83/00931 ist weiterhin ein Verfahren zur Erkennung der ausreichenden Benetzung eines analytischen Testelements mit wässriger Probenflüssigkeit bekannt. Das Verfahren kann außer zur Erkennung einer eventuellen Unterdosierung ebenfalls dazu dienen, eine Abschätzung über das tatsächlich auf dem Testelement aufgegebene Probenvolumen zu leisten. Das Verfahren nutzt die optischen Absorptionseigenschaften des Wassers in der Probenflüssigkeit, insbesondere im infraroten Spektralbereich und ist somit auf eine Anwendung bei wässrigen Probenflüssigkeiten beschränkt. Des weiteren ist aufgrund der Absorptionsbande von Wasser eine IR-Optik erforderlich, deren Aufbau sich häufig als aufwendig erweist.

Das Dokument US 6 312 888 offenbart ein Verfahren, wobei ein Farbstoff in die Probensubstanz eingeführt wird, um die Anwesenheit von genügendem Probenmaterial festzustellen.

In dem durch das Dokument EP 0 816 849 offenbarten verfahren wird die optische Remission eines Testelements in zwei Wellenlängen detektiert, um den Einfluss des Untergrundrauschen auf die Messung eines Analyten zu reduzieren.

Die Aufgabe der vorliegenden Erfindung ist es, die Nachteile des Standes der Technik zu beseitigen. Insbesondere besteht die der Erfindung zugrunde liegende Aufgabe darin, ein Verfahren sowie ein System bereitzustellen, das eine Fehldosierung mit hoher Präzision erkennt, ohne dass hierfür ein aufwendiges optisches System oder Verfahren erforderlich ist.

Diese Aufgabe wird durch den Gegenstand der Erfindung, wie er in den unabhängigen Patentansprüchen charakterisiert ist, gelöst. Bevorzugte Ausführungsformen der Erfindung sind in den abhängigen Ansprüchen angegeben.

Gegenstand der Erfindung ist ein Analysesystem zur Ermittlung der Probenmenge in einem Auswertungsbereich eines Testelementes. Das Analysesystem beinhaltet eine Beleuchtungseinheit, die in einem Kontroll-Wellenlängenbereich Strahlung emittiert, in dem eine Kontrollsubstanz in Abhängigkeit von einem Kontakt mit einer Probenmatrix mit der Strahlung wechselwirkt. Das System beinhaltet weiterhin einen Detektor zur Detektion der Strahlung, die mit der Kontrollsubstanz wechselgewirkt hat, sodass ein Detektionswert generiert wird.

Mittels einer Auswertungseinheit kann eine Probenmenge in einem Auswertungsbereich eines Testfeldes bestimmt werden. Hierfür wird die detektierte Strahlung mit einem vorbekannten Detektionswert der Kontrollsubstanz bei bekannter Probenmenge im Auswertungsbereich verglichen und zur Ermittlung der Probenmenge herangezogen.

Weiterhin ist ein Testelement zur Detektion einer Probenmenge Gegenstand der Erfindung. Das Testelement beinhaltet ein Testfeld mit einem Reagenz, welches mit einem Analyten einer Probe wechselwirkt, sodass bei Bestrahlung des Testfeldes in einem Detektions-Wellenlängenbereich das analytspezifisches Reagenz in Abhängigkeit von der Analytkonzentration mit der Strahlung wechselwirkt. Zur Detektion einer auf dem Testelement aufgegebenen Probenmenge enthält das Testelement weiterhin eine Kontrollsubstanz im Testfeld, die mit einer Probenmatrix der Probe wechselwirkt, sodass bei Bestrahlung des Testfeldes in einem Kontroll-Wellenlängenbereich die Kontrollsubstanz in Abhängigkeit von der auf dem Testfeld aufgegebenen Probenmenge mit der Strahlung wechselwirkt.

Mit Hilfe des erfindungsgemäßen Systems oder Verfahren ist es möglich, zuverlässig eine Fehldosierung auf einem Testelement zu erkennen. Hierbei wird die tatsächlich aufgetragene Probenmenge bzw. der Bedeckungsgrad auf dem Testelement vorteilhafterweise ermittelt, sodass bei einer Fehldosierung eine Korrekturrechnung erfolgen kann und der Benutzer nicht zur erneuten Blutaufgabe gezwungen wird. Unterschreitet der Bedeckungsgrad jedoch einen vorbestimmten Schwellenwert, wird in einer weiteren bevorzugten Ausführungsform die Messwertauswertung unterbrochen, da eine Genauigkeit des Messwertes trotz Korrekturrechnung nicht garantiert werden kann.

Durch eine geeignete Wahl der Kontrollsubstanz ist der Kontrollwellenlängenbereich frei wählbar, sodass z. B. nicht im IR-Bereich gemessen werden muss. Hierdurch kann der Aufbau der Geräteoptik kostengünstig gehalten werden. Des weiteren können störende Überlagerungen von Wasserbanden im IR-Bereich vermieden werden.

Der Begriff Kontrollsubstanz beinhaltet Substanzen, die bei Kontakt mit der Probenmatrix mit dieser wechselwirken. Der Kontakt der Kontrollsubstanz mit der Probenmatrix findet dabei in der Weise statt, dass bei Bestrahlung der Kontrollsubstanz in dem Kontrollwellenlängenbereich ein Detektionswert detektiert wird, der sich in Abhängigkeit von der Probenmenge verändert. Beispielsweise wird eine Änderung des Detektionswertes durch eine Veränderung der physikalischen und/oder chemischen Eigenschaften der Kontrollsubstanz bei Kontakt mit der Probenmatrix verursacht.

Als Detektionswert ist hierbei ein Wert zu verstehen, der nach Bestrahlung des Testelementes z. B. durch die vom Testelement reflektierte, transmittierte oder emittierte Strahlung generiert wird.

Wird die Strahlung vom Testelement reflektiert oder transmittiert, kann eine Veränderung des Detektionswertes z. B. durch ein verändertes Absorptionsverhalten der Kontrollsubstanz begründet werden. Hierbei ist es z. B. denkbar, dass die Kontrollsubstanz bei Kontakt mit der Probenmatrix einen Farbstoff bildet, der im Kontrollwellenlängenbereich absorbiert. Der Detektionswert wird dann durch die vom Testelement reflektierte oder transmittierte Strahlung in Abhängigkeit von dem gebildeten Farbstoff generiert. Es ist weiterhin auch denkbar, dass die Kontrollsubstanz z. B. eine lumineszierende Substanz beinhaltet, so dass bei Kontakt der Kontrollsubstanz mit der Probenmatrix durch die Bestrahlung im Kontroll-Wellenlängenbereich Luminiszenz angeregt wird, wobei die Intensität der Luminiszenz durch die aufgegebene Probenmenge bestimmt wird.

Unter dem Begriff Kontakt bzw. Wechselwirkung mit der Probenmatrix ist im Sinne der Erfindung jede mögliche Form der Wechselwirkung der Kontrollsubstanz mit der Probenmatrix zu verstehen. Ist die Kontrollsubstanz ein Farbbildner, kann sich beispielsweise ein Farbstoff aufgrund einer chemischen Reaktion oder van der Waals-Wechselwirkungen bilden. Die Absorption des gebildeten Farbstoffes wird dann in einem Auswertungsbereich des Testfeldes vermessen und gilt als Maß für die aufgegebene Probenmenge. Handelt es sich bei der Kontrollsubstanz um eine luminiszierende Substanz, sind ebenfalls alle möglichen Wechselwirkungen mit der Probenmatrix denkbar, die eine Luminiszenz beeinträchtigen und oder ermöglichen. Hierbei ist es z. B. möglich, eine lumineszierende Substanz als Kontrollsubstanz zu verwenden, deren Lumineszenzverhalten sich bei Kontakt mit der Probenmatrix (z. B. durch Quenchen der Lumineszenz) verändert. Ebenso können auch Substanzen verwendet werden, die erst bei Kontakt mit der Probenmatrix zur Luminiszenz befähigt werden. Wie beschrieben beinhaltet der Begriff Kontakt mit der Probenmatrix somit unter anderem, dass die Intensität der Luminiszenz lediglich durch Stöße von Probenmatrixmoleküle mit Molekülen der Kontrollsubstanz beeinträchtigt wird. Die Wechselwirkung der Kontrollsubstanz mit Strahlung im Kontroll-Wellenlängenbereich kann folglich direkt (z. B. durch Bildung eines Farbstoffes oder einer lumineszierenden Substanz) oder indirekt (z. B. Intensitätsänderung von Luminiszenz durch Quenchprozesse) mit dem Kontakt zur Probenmatrix in Abhängigkeit stehen.

Prinzipiell ist das Verfahren weder auf eine bestimmte Wechselwirkung der Kontrollsubstanz mit der Probenmatrix beschränkt, noch auf Prozesse, die in Abhängigkeit von der Probenmenge die Wechselwirkung der Kontrollsubstanz mit elektromagnetischer Strahlung beeinflussen, solange aufgrund des Kontakts mit der Probenmatrix eine messbare Veränderung der Wechselwirkung der Kontrollsubstanz mit Strahlung hervorgerufen wird und diese messbare Veränderung auf die aufgegebene Probenmenge Rückschlüsse zulässt.

Der Begriff Probenmenge kann im Sinne der Erfindung z. B. als absolute Volumen- oder Mengenangabe der aufgegebenen Probe verstanden werden. Häufig wird jedoch keine absolute Probenmenge bestimmt, sondern vorteilhafterweise ein Bedeckungsgrad des Testfeldes, der auf eine hinreichende Probenaufgabe schließen lässt. Allgemein sind vielfältige Möglichkeiten als Maß für die Probenmenge denkbar, die auf die Probenmenge, die mit dem analytspezifischen Reagenz wechselwirkt, schließen lassen. Im Stand der Technik sind z. B. Verfahren zur Analytbestimmung beschrieben, bei denen aufgrund des Bedeckungsgrades des Testfeldes auf die Probenmenge geschlossen wird, die mit einem analytspezifischen Reagenz in Kontakt kommt. Beispielsweise sind solche Verfahren und Systeme in EP 0 819 943 offenbart.

Aufgrund einer präzisen Bestimmung der Probenmenge auf einem Testelement wird das erfindungsgemäße Verfahren bzw. System vorteilhafterweise bei der Bestimmung einer Analytkonzentration eingesetzt. Hierbei erweist sich die Erfindung besonders im Rahmen der modernen Analytik, insbesondere im Home-Monitoring-Bereich, als geeignet. In diesem Anwendungsbereich werden besondere Ansprüche an ein Analysesystem gestellt, da es besonders im Home-Monitoring Bereich ein wichtiges Bestreben ist, trotz einer Minimierung der Probenmenge präzise eine Analytkonzentration zu bestimmen, ohne auf apparativ aufwendige Bedingungen angewiesen zu sein. Erwiesenermaßen werden jedoch insbesondere Home-Monitoring-Geräte häufig von ungeübten und älteren Benutzern bedient, sodass es hierbei oftmals zu Fehldosierungen der Probe auf einem Testelement kommt. Das erfindungsgemäße System erlaubt einen einfachen Geräteaufbau, sodass die Produktionskosten für die Analysesysteme niedrig bleiben und für den Patienten als Home-Monitoring-System erschwinglich sind. Durch das erfindungsgemäße System/Verfahren bleiben dem Patienten aufwendige Blutentnahmen erspart, da eine Minimierung der zur Analyse notwendigen Probenmenge erfolgen kann. Dabei wird berücksichtigt, dass gerade bei einer Konzentrationsbestimmung aus kleinen Probenmengen eine Fehldosierung schwerwiegend ist, da bereits geringe Schwankungen der Probemenge erhebliche Fehler bei der Konzentrationsberechnung zur Folge haben.

Derartige Fehldosierungen werden von einer vorteilhaften Ausführungsform des erfindungsgemäßen System durch einen Vergleich der detektierten Strahlung, wie beschrieben, mit einem vorbekannten Detektionswert der Kontrollsubstanz bei bekannter Probenmenge im Auswertungsbereich erkannt. Hierbei kann der Vergleich mit dem vorbekannten Detektionswert bevorzugt dadurch erfolgen, dass lediglich ein Über- oder Unterschreiten des vorbekannten Absorptionswertes registriert wird, ohne dass eine nähere Quantifizierung der Probenmenge erfolgt.

Bei der erfindungsgemäßen Lösung kann jedoch vorteilhafterweise eine Unterdosierung des Auswertungsbereiches eines Testelements nicht nur sicher erkannt, sondern - vorteilhafterweise bis zu einem bestimmten Schwellenwert - auch kompensiert werden. Dem Benutzer bleibt somit im Falle einer Fehldosierung eine erneute Blutentnahme erspart.

Eine Unterdosierung im Sinne der Erfindung ist dann gegeben, wenn ein zu untersuchender Bezirk der Oberfläche des Testelementes (Auswertungsbereich) nicht vollständig mit Probenflüssigkeit bedeckt ist. Somit steht z. B. eine remissionsphotometrisch auszuwertende Fläche nicht im gesamten Umfang für die Analytnachweisreaktion zur Verfügung, sondern nur ein Bruchteil davon. Die Absorption der Analytnachweisreaktion wird dann Fehlerhafterweise auf ein zu große Probenmenge bezogen, sodass eine zu geringe Konzentration als Messwert ausgegeben wird. Das erfindungsgemäße System korrigiert den Messwert unter Berücksichtigung der tatsächlich ausgegebenen Probenmenge.

Der Begriff "Auswertungsbereich" umfasst hierbei den Bereich des Testfeldes, der von der Beleuchtungseinheit bestrahlt wird und kann z. B. gleich dem Testfeld sein, wobei eine vollständige Bestrahlung des Testfeldes erfolgt.

Neben einer Erkennung und Kompensation einer tatsächlichen Unterdosierung werden weiterhin auch Inhomogenitäten bei der Probenverteilung im Nachweiselement, die nicht auf zu wenig Probenflüssigkeit zurückzuführen sind, berücksichtigt. Derartige Inhomogenitäten im Nachweiselement sind beispielsweise herstellungsbedingt.

Im Rahmen der Erfindung sind unter dem Begriff Probe, insbesondere Körperflüssigkeiten wie Blut, Speichel, Urin, oder von Körperflüssigkeiten abgeleitete Flüssigkeiten wie Serum, Plasma, verdünnte Blut-, Speichel- oder Urinproben zu verstehen.

Die Bestimmung eines Analyten aus einer Probe erfolgt beispielsweise mittels eines Testelementes, wie es im Stand der Technik hinreichend z. B. zur Glukosebestimmung aus Blut, US 6,036,919, oder zur Enzymbestimmung aus Plasma DE 3130749 bekannt ist. Der Analyt reagiert hierbei bevorzugt mit einem im Testelement vorhandenem Reagenz und bildet in Abhängigkeit von der Analytkonzentration einen Farbstoff. Die Analytkonzentration wird aufgrund der vermessenen Absorption des Farbstoffes ermittelt. Die Vermessung der Absorption erfolgt beispielsweise reflektionsphotometrisch, wobei jedoch auch Messung von Transmission oder Fluoreszenz möglich sind. Allgemein ist das erfindungsgemäße System/Verfahren nicht auf Remissionsmessung beschränkt, sondern soll andere Varianten mitumfassen.

In einer vorteilhaften Ausführungsform wird der für die Messung des Analyten zur Verfügung stehende Remissionshub möglichst groß gewählt. Dies bedeutet, dass der Abstand der Remissionswerte für minimale und maximale Analytkonzentrationen maximiert wird, da der Remissionshub großen Einfluss auf die Präzision von reflektionsphotometrischen Messungen hat. Der Remissionshub ist dabei zu der von der Probenflüssigkeit bedeckten Fläche des Nachweiselements proportional. Wird als Kontrollsubstanz ein Farbbildner verwendet, hat es sich unter anderem als vorteilhaft herausgestellt, die Farbe des in Abhängigkeit von dem Bedeckungsgrad gebildeten Chromophors so zu wählen, dass bei einer gewählten Wellenlänge (Kontroll-Wellenlängenbereich) bei vollständiger Benetzung des untersuchten Auswertungsbereiches möglichst geringe, vorzugsweise keine Remission zu beobachten ist, sodass eine große Differenz der Remissionswerte und somit eine präzise Bestimmung der tatsächlich befeuchteten Fläche des Nachweiselements erzielt wird. Besonders bevorzugt sollte dann bei Abwesenheit der Probe eine möglichst hohe Remission erhalten werden.

In der Praxis empfiehlt es sich, einen unteren Schwellenwert für die mit Probenflüssigkeit bedeckte Fläche des Nachweiselements festzulegen. Bei einer vorteilhaften Ausführungsform wird der Wert der ermittelten Probenmenge mit einem solchen, zuvor gespeicherten Schwellenwert verglichen. Bis zu diesem Schwellenwert entspricht die Präzision einer Messung den Qualitätsansprüchen eines Messsystems, sodass für Werte unterhalb dieses Schwellenwerts die Ausgabe eines Messwerts unterdrückt werden sollte.

Der Zusammenhang zwischen gefundener Remission und tatsächlich befeuchteter Fläche kann in an sich bekannter Weise im Messgerät gespeichert sein oder dem Messgerät zusammen mit anderen chargenspezifischen Daten für die verwendeten Testelemente übergeben werden, beispielsweise mittels Barcode, ROM-Key oder über eine Eingabetastatur.

Als Kontrollsubstanz kann im Sinne der Erfindung z. B. Fluorescein verwendet werden.

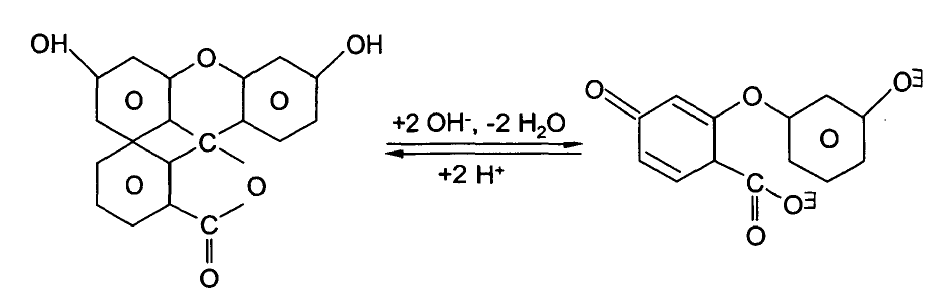

Bei Kontakt mit der Probenmatrix wird das Fluorescein durch das in der Probenmatrix enthaltene Wasser hydrolysiert. Wird anschließend Fluorescein zur Fluoreszenz angeregt, zeigt sich eine erhöhte Intensität der Fluoreszenz in Abhängigkeit der Benetzung des Testfeldes.

Weiterhin kann als Kontrollsubstanz im Sinne der Erfindung ein Farbbildner verwendet werden, der die Anwesenheit der Probe im Testelement durch eine leicht beobachtbare Farbänderung anzeigt. Substanzen, die aufgrund der Anwesenheit von Proben ihre Farbe ändern, sind in großer Zahl bekannt. Dabei ist es für die vorliegende Erfindung nur von untergeordneter Bedeutung, auf welche Weise die Probe, mit der zur Farbänderung befähigten Substanz wechselwirkt. Wichtig ist dabei, dass das Ausmaß der Farbänderung mit der Probemenge bzw. dem Bedeckungsgrad des Auswertungsbereiches korreliert ist. Hierbei kann vorteilhafterweise von der Probenmenge, die mit der Kontrollsubstanz in Kontakt kommt, auf die Probenmenge geschlossen werden, die mit dem Reagenz wechselwirkt.

Vorteilhafterweise wechselwirkt die Kontrollsubstanz im Kontroll-Wellenlängenbereich nicht mit der Strahlung, wenn keine Probe auf das Testfeld aufgegeben wurde. Nach Probenaufgabe wechselwirkt die Kontrollsubstanz weiterhin vorteilhafterweise nicht im Detektions-Wellenlängenbereich. Wird als Kontrollsubstanz ein Chromophor verwendet liegt der Kontroll-Wellenlängenbereich vorzugsweise zwischen 500 und 600 nm, bevorzugterweise bei 572 nm.

Als Probenmatrix sind im Sinne der Erfindung alle Probenbestandteile zu verstehen, die nicht als Analyt bezeichnet werden und in hinreichender Menge in der Probe vorhanden sind. Beispielsweise kann der Begriff Probenmatrix für biologischen Flüssigkeiten Wasser umfassen, sodass das in der Probenmatrix enthaltene Wasser im Testfeld mit dem Farbbildner einen Farbstoff bildet.

Als Farbänderung soll hier verstanden werden, dass die chemische Verbindung ihre Farbe in Gegenwart der Probenflüssigkeit ändert (Farbwechsel), von einem farblosen in einen farbigen Zustand übergeht (Entstehung von Farbe) oder umgekehrt von einem farbigen in einen farblosen Zustand wechselt (Verschwinden von Farbe).

Vorzugsweise geht die chemische Verbindung in Gegenwart der Probenflüssigkeit von einem farblosen in einen farbigen Zustand über. Im Idealfall ist hier die gemessene Remission bei der Wellenlänge des so entstandenen Chromophors umgekehrt proportional zur tatsächlich von Probenflüssigkeit benetzten Fläche des Nachweiselements des Teststreifens.

Hierbei wird beispielsweise ein Testelement verwendet, das aus 2 Schichten gebildet wird. Durch den geschichteten Aufbau wird gewährleistet, dass die detektierte Probenmenge bzw. der Bedeckungsgrad des Testfeldes Rückschlüsse auf die Probenmenge zulässt, die mit dem analytspezifischen Reagenz in Kontakt kommt. Beispielsweise sind mehrschichtige Testelemente in den Dokumenten US 6,036, 919 und US 5,846,837 beschrieben. Ein analytspezifisches Reagenz ist z. B. 2,18-Phosphormolybdänsäure (P₂ Mo₁₈ Oₓ) und dient zur Bestimmung der Glucosekonzentration.

Die in der Probe vorhandene Glucose reagiert mit dem Reagenz unter Bildung eines Farbstoffes. Mittels des Analysesystems wird zunächst die Absorption des analytabhängigen Farbstoffes in einem ersten Wellenlängenbereich im angeführten Beispiel der 2, 18 Phosphormolybdänsäure bei 660 nm gemessen, sodass die Glucosekonzentration bestimmt werden kann. Anschließend oder vor der Erfassung des analtyabhängigen Farbstoffs erfolgt eine Messung im Kontrollwellenlängenbereich, sodass z. B. eine Absorption eines analytunabhängigen Farbstoffs detetektiert wird. In einer bevorzugten Ausführungsform das Testelement zur Bestimmung der Probenmenge beinhaltet ein Testfeld Chlorphenolrot als analytunabhängiger Farbbildner. Nach Auftragen der Probe, z. B. Blut auf das Testfeld, öffnet sich durch das im Vollblut enthaltene Wasser der Ring der Sulfonsäuregruppe des Chlorphenolrots und ein Farbstoff mit einem Absorptionsmaximum bei 572 nm wird gebildet. 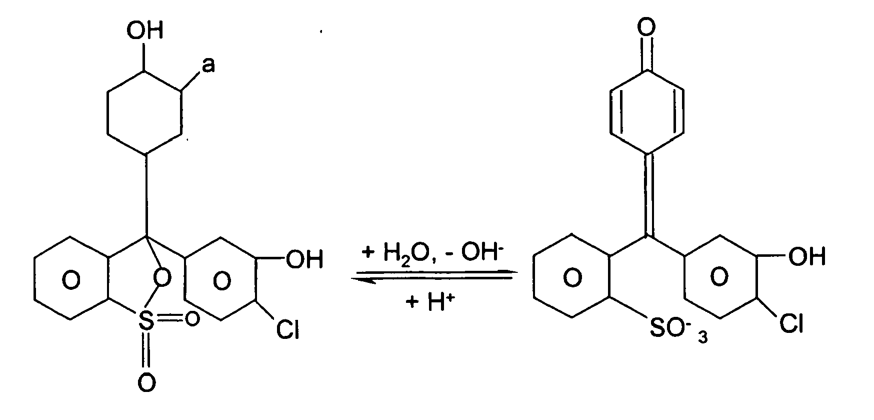 Nach der Detektion der Absorption des Chlorphenolrots bei 572 nm wird der gemessene Absorptionswert mit einem Absorptionswert von Chlorphenolrot bei einer vorgegebenen, bekannten Probenmenge verglichen. Durch den Vergleich der Absorptionswerte des Chlorphenolrots miteinander kann auf die Probenmenge der Blutprobe geschlossen werden. Die berechnete Probenmenge wird anschließend bei der Glucosebestimmung miteinbezogen, sodass die ermittelte Glucosekonzentration unter Berücksichtigung der aufgetragenen Probenmenge exakt ermittelt wird. Ein hierfür vorteilhaftes Analysesystem beinhaltet folglich eine Beleuchtungseinheit, die in mindestens zwei unterschiedlichen Wellenlängenbereichen Strahlung emittieren kann.

Die Messung zur Bestimmung der Probenmenge erfolgt somit vorteilhafterweise in einen Wellenlängenbereich, der von dem der Analytbestimmung verschieden ist. Dies erlaubt u.a. sowohl für die Probenmenge, als auch für die Analytbestimmung einen maximalen Remissionshub, sodass die Genauigkeit des Verfahrens optimiert wird.

Weiterhin ist ein Verfahren zur Ermittlung einer Probenmenge in einem Auswertungsbereich eines Testelementes Gegenstand der Erfindung.

Das Verfahren beinhaltet Bestrahlung einer Probe auf ein Testfeld eines Testelementes. Hierbei wird in einem Kontroll-Wellenlängenbereich das Testfeld in der Weise bestrahlt, dass mindestens ein Auswertungsbereich des Testfeldes von der Strahlung erfasst wird. Das Testfeld des Testelementes enthält eine Kontrollsubstanz, die mit einer Probenmatrix der Probe in der Weise wechselwirkt, dass die Kontrollsubstanz mit der elektromagnetischen Strahlung im Kontroll-Wellenlängenbereich in Abhängigkeit von dem Kontakt mit der Probenmatrix wechselwirkt. Es erfolgt eine Detektion von Strahlung, die mit der Kontrollsubstanz wechselgewirkt hat, sodass hierdurch ein Detektionswert generiert wird. Durch Vergleich der detektierten Strahlung mit einem vorbekannten Detektionswert der Kontrollsubstanz bei bekannter Probenmenge im Auswertungsbereich wird die Probenmenge im Auswertungsbereich ermittelt.

Vorteilhafte Ausführungsformen des Verfahrens ergeben sich wie beschrieben. Bevorzugte Ausführungsformen des Systems und des Testelementes sind zur Durchführung des Verfahrens geeignet.

Die Erfindung wird durch die Figuren und die nachfolgenden Beispiele näher erläutert:

Der Einfachheit und Klarheit halber wird im Folgenden, sofern als Kontrollsubstanz ein Farbbildner verwendet wird, immer der bevorzugte Fall beschrieben, dass die chemische Verbindung, die als Indikator und Maß für die Anwesenheit von Probenflüssigkeit im Auswertungsbereich dient, von einem farblosen Zustand, ohne Probenkontakt, zu einem farbigen Zustand, mit Probenkontakt, übergeht. Selbstverständlich ist die Erfindung nicht auf diesen Fall beschränkt. Durch Analogieüberlegungen kann die Erfindung problemlos auf die Fälle "Farbwechsel" und "Verschwinden von Farbe" übertragen werden. Diese Fälle sollen ausdrücklich mitumfasst sein.
- Figur 1:: Analysesystem mit Testelement
- Figur 2:: Analysesystem mit lichtleitendem Testelement
- Figur 3:: Absorptionsbanden des Chlorphenolrots im Bereich von 550 bis 950 nm
- Figur 4:: Fluoreszenzmessungen mit Fluorescein bei 420 nm

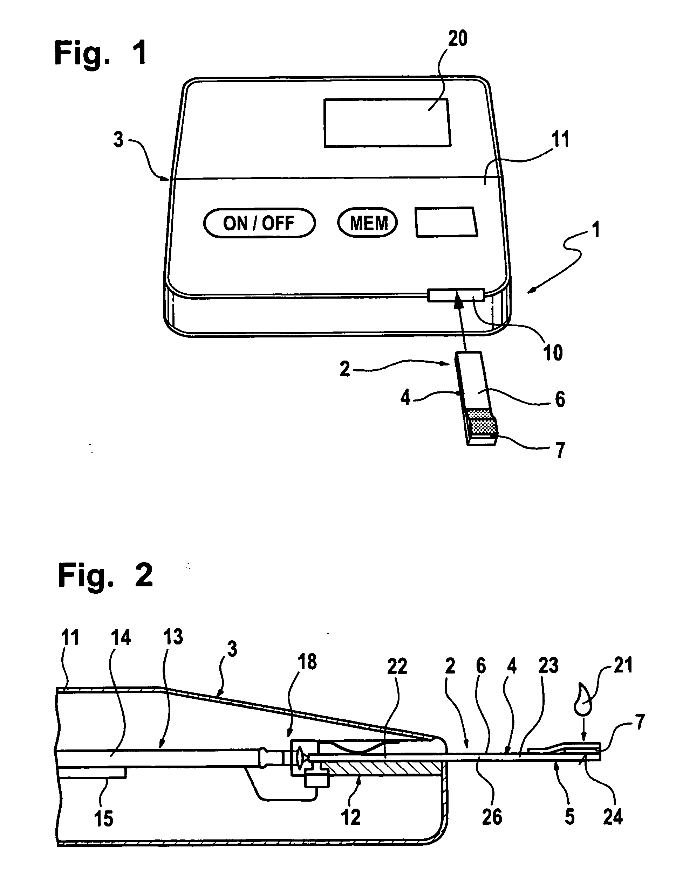

Das in Figur 1 dargestellte Analysesystem (1) beinhaltet ein Testelement (2) und ein Auswertegerät (3). Das Testelement (2) ist als Teststreifen (4) mit einer langgestreckten, aus Kunststoff hergestellten Tragfolie (5) und einem an der oberen Flachseite (6) der Tragfolie (5) befestigten Testfeld (7) ausgebildet.

Das Testelement (2) wird durch eine Öffnung (10) ins Gehäuse (11) des Auswertegerätes (3) in eine Testelementhalterung (nicht dargestellt) eingeschoben und in einer Messposition positioniert. Das Auswertegerät (3) enthält eine Mess- und Auswerteelektronik (13), die mittels einer Leiterplatine (14) und integrierter Schaltkreise (15) realisiert ist. An die Mess- und Auswerteelektronik (13) angeschlossen ist ein vorzugsweise als Leuchtdiode (LED) realisierter Lichtsender und ein vorzugsweise als Photodiode realisierter Detektor, die Bestandteile einer optischen Messeinrichtung sind (nicht abgebildet).

Figur 2 zeigt detailliert die Anwendung des erfindungsgemäßen Verfahrens bei einem Analysesystem mit lichtleitenden Testelementen, die z. B. im Stand der Technik (WO 01/48461) beschrieben sind. Hierbei zeigt sich die Anwendung des erfindungsgemäßen Verfahrens und Systems als besonderst vorteilhaft, da übliche Verfahren im Stand der Technik zur Erkennung von Unterdosierung bei derartigen Systemen oftmals nicht angewendet werden können.

Zur Durchführung einer Analyse wird ein Tropfen Probenflüssigkeit (21) auf die von der Tragfolie (5) abgewandte Seite (Oberseite) des Testfeldes (7) aufgebracht. Das Aufbringen der Probe wird dadurch erleichtert, dass sich nur ein erster Teilabschnitt (22) des in der Messposition positionierten Testelementes (2) innerhalb des Gehäuses (11) befindet, während ein zweiter Teilabschnitt (23) mit dem Testfeld (7) aus dem Gehäuse (11) herausragt und dadurch leicht zugänglich ist. Die Flüssigkeit dringt unter Auflösung der in dem Testfeld (7) enthaltenen Reagenzien ein.

Die Reaktion des in der Probe enthaltenen Analyten mit dem Reagenzsystem führt zu einer optisch messbaren Änderung, insbesondere einer Farbänderung. Zur photometrischen Auswertung wird die bei Beleuchtung eines Auswertungsbereiches (24) des Testfeldes (7) mit Primärlicht einer ersten Wellenlänge diffus reflektierte Sekundärlicht-Intensität gemessen. Dies geschieht bei dem gezeigten lichtleitenden Testelement durch eine spezielle Gestaltung des Teststreifens (2) und der damit zusammenwirkenden Teile der optischen Messeinrichtung (18).

Die Tragfolie (5) schließt mindestens eine optische Lichtleitschicht (26) ein. Nähere Informationen über Lichtleitelemente, deren Lichttransport auf Totalreflexion basiert, können der einschlägigen Literatur entnommen werden.

Im gezeigten Beispiel wird der Teststreifen (2) zur Bestimmung der Glucosekonzentration verwendet und beinhaltet hierfür im Testfeld das Reagenz 2,18-Phosphormolybdänsäure. Das Reagenz reagiert mit der Glucose und bildet einen farbigen Komplex, der bei ca. 660 nm absorbiert. Reagenzien, die zum Nachweis einer Glucosekonzentration auf Testträgern verwendet werden, sind im Stand der Technik hinreichend bekannt und werden u. a. in dem Dokument US 6,036,919 beschrieben. Prinzipiell ist natürlich auch jede andere Form eines Reagenzsystems denkbar, bei dem sich vorteilhafterweise der Detektionswellenlängenbereich von Kontrollwellenlängenbereichen unterscheidet. Weiterhin besteht auch die Möglichkeit, den im Detektionswellenlängenbereich zu bestimmenden Analyten direkt zu erfassen, ohne dass dieser zuvor mit einem Reagenz wechselwirkt.

Das Testelement (2) beinhaltet weiterhin einen Farbbildner, welcher ebenfalls im Testfeld (7) vorliegt. Durch das in der Probe vorhandene Wasser reagiert der Farbstoffbildner nach Probenaufgabe (21) zu dem Farbstoff Chlorphenolrot.

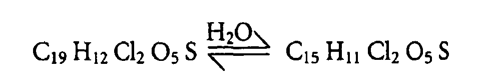

Wird der Teststreifen (2) nun mittels des Analysegerätes (1) ausgewertet, wird zunächst Strahlung im Detektionswellenlängenbereich von 660 nm emittiert, sodass die vom Testfeld (7) reflektierte Strahlung in Abhängigkeit von der in der Probe vorhandenen Glucosekonzentration detektiert wird. Die detektierte Signalintensität entspricht zunächst der absoluten Glucosemenge, die in der vermessenen Probe vorliegt. Anschließend wird das Testfeld in einem Kontrollwellenlängenbereich von ca. 572 nm bestrahlt. In diesem Wellenlängenbereich absorbiert Chlorphenolrot in Anwesenheit von Wasser, sodass nahezu keine Remission mehr detektiert wird, sobald das Testfeld (7) vollständig mit der Probe (21) bedeckt ist.

Da es sich im dargestellten Beispiel bei der Probe (21) um einen Blutstropfen handelt, kann davon ausgegangen werden, dass hinreichend Wasser in der Probe vorhanden ist und eine vollständige Umsetzung des Farbbildners erfolgt, sobald dieser mit der Probe in Kontakt kommt. Prinzipiell sind vielfältige Inhaltsstoffe der Probenmatrix denkbar, die mit einem Farbbildner in Wechselwirkung treten und einen Farbstoff bilden. Hierbei ist lediglich darauf zu achten, dass der wechselwirkende Stoff der Probenmatrix in hinreichender Menge vorhanden ist, sodass sich eine in Abhängigkeit von der Probenmenge vorbestimmte Absorption des Farbstoffes ergibt, sobald das Testfeld mit der Probe in Kontakt kommt.

Im Gegensatz zum Stand der Technik, bei dem z. B. Wasser direkt detektiert wird, ist erfindungsgemäß durch die Verwendung der Kontrollsubstanz, der Kontrollwellenlängenbereich frei wählbar und verfügt über eine diskrete Absorptionsbande. Hierdurch können störende Absorptionsbanden, z. B. von reinem Wasser, durch die es zu Überlagerungen käme, mittels geeigneter Wahl des Wellenlängenbereichs vermieden werden.

Das detektierte Signal des Farbstoffes im Kontrollwellenlängenbereich wird registriert und mit einem Absorptionswert (Eichwert) des Farbstoffs beispielsweise bei vollständiger Bedeckung des Testfeldes durch die Probe verglichen. Durch den Vergleich des gemessenen Absorptionswertes mit dem Eichwert ist es möglich, das Volumen der Probe zu errechnen oder dieses direkt zu ermitteln. Anschließend wird die zuvor ermittelte Glucosemenge auf die Probenmenge bezogen, sodass sich eine exakte Bestimmung der Glucosekonzentration ergibt. Diese wird dem Benutzer über das Display (20) mitgeteilt. Erfolgt eine Unterdosierung der Probe in dem Maße, dass die Qualität der Messung nicht mehr gewährleistet werden kann, unterschreitet die aufgegebene Probenmenge einen gespeicherten Schwellenwert. Wird das Unterschreiten des Schwellenwertes von dem System festgestellt, wird eine Ausgabe eines Messergebnisses verweigert und der Benutzer wird mittels des Displays über die ungültige Messung informiert und aufgefordert, die Messung zu wiederholen.

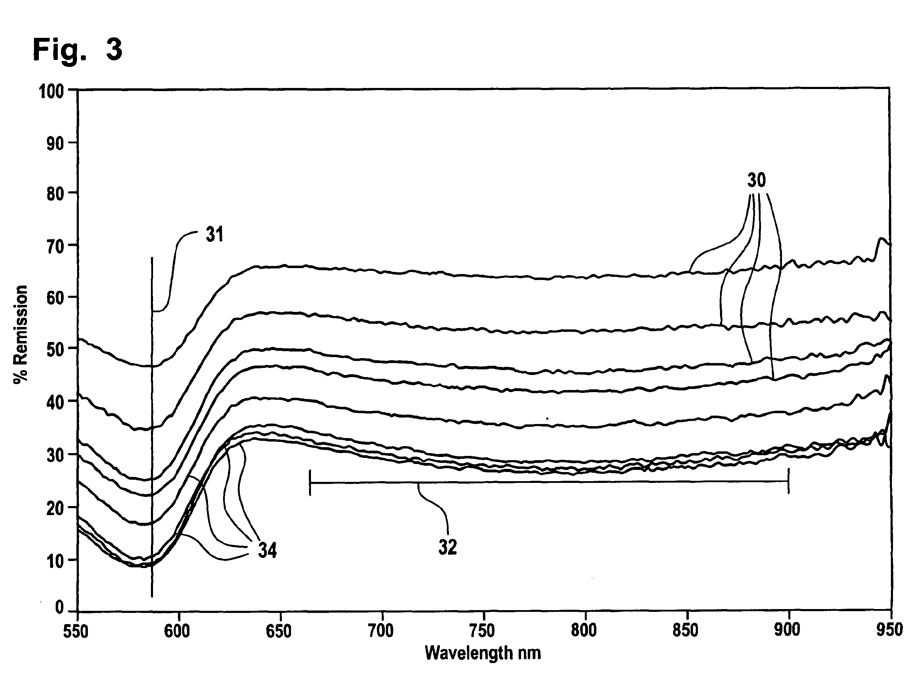

Figur 3 zeigt unterschiedliche Absorptionsbanden (30 und 34) von Chlorphenolrot, die bei der Vermessung verschieden großer Probenvolumina auf dem Testfeld detektiert werden. In der Darstellung, Figur 3, wird hierbei der Wellenlängenbereich in nm gegen die Remission ausgehend von 100 % Remission, wenn keine Absorption durch das Testelement stattfindet und keine Probe auf dem Testelement aufgegeben ist, aufgetragen.

Das Absorptionsmaximum (31) von Chlorphenolrot liegt, wie bereits beschrieben, bei 572 nm. Wird hinreichend Probe auf das Testelement aufgegeben, so dass es zur vollständigen Bedeckung des Testfeldes kommt, absorbiert der Farbstoff das Licht, sodass ein Remissionsminimum des Lichtes im Bereich von 9 -13 % vom Detektor registriert wird. Wird eine Remission in diesem Bereich gemessen, so dass eine fast vollständige Absorption des Lichtes stattfindet, ist hinreichend Probe auf das Testelement aufgegeben worden. Überschreitet die Lichtintensität jedoch einen vorgegebenen Remissionswert (z. B. 15 %), ist nicht genügend Probe auf dem Teststreifen aufgegeben worden, so dass der Teststreifen unterdosiert ist. In Abhängigkeit von dem Analysensystem kann sich jedoch der Remissionswert, ab dem das Testelement als unterdosiert gilt, verändern. Vorteilhafterweise wird z. B. eine Unterdosierung des Testelements bereits bei 3 % Remission registriert. Anhand der gemessenen Remission muss dann zunächst auf die aufgegebene Probenmenge bzw. auf den Bedeckungsgrad des Testfeldes geschlossen werden, bevor eine Glucosekonzentration berechnet werden kann. Durch den Detektionswert, der bei vollständigen Bedeckung des Testfeldes registriert wird, kann auf den Bedeckungsgrad des Testfeldes bei dem vermessenen Remissionswert geschlossen werden.

Hierbei zeigt sich ein linearer Zusammenhang zwischen der gemessenen Remission und dem Bedeckungsgrad des Testfeldes bzw. der aufgegebenen Probenmenge.

In einer zweiten Messung im Bereich (32) von 650 und 900 nm wird nun die Absorption der analytspezifischen Reagenz gemessen. In Abhängigkeit von der absoluten Menge der in der Probe enthaltenen Glucose wird das Licht in unterschiedlich starkem Maße absorbiert. Fig. 3 verdeutlicht anschaulich das Ansteigen der Remission bei Abnahme der absoluten Glucosemenge. Die Abnahme der absoluten Glucosemenge wird im gezeigten Beispiel durch -Verringerungen der Probenmenge und folglich durch eine unzureichende Bedeckung des Testfeldes erzielt bei identischer Glucosekonzentration in den jeweiligen Proben.

Wird beispielsweise zur Bestimmung der Glucosekonzentration bei 750 nm die Remission gemessen, wird bei hinreichender Probenmenge von einem Remissionswert von 75 % auf die Glucosekonzentration geschlossen. Die Vermessung derselben Probe bei einem unterdosierten Testfeld würde jedoch eine Remission zwischen 85 % und 90 % Remission ergeben und somit fälschlicherweise auf eine zu geringe Glucosekonzentration schließen lassen. Die Glucosekonzentration muss folglich unter Berücksichtigung der gemessenen absoluten Glucosemenge und des ermittelten Bedeckungsgrades des Testfeldes bestimmt werden.

Überschreitet die Lichtintensität im Kontrollwellenlängenbereich jedoch einen Schwellenwert (35), würde sich trotz einer Korrektur des Glucosemesswertes um den ermittelten Bedeckungsgrad die Bestimmung der Glucosekonzentration als unzuverlässig und nicht hinreichend genau erweisen. Eine derartige Unterdosierung ist z. B. gegeben, wenn weniger als 1/3 des Testfeldes bedeckt ist. Dem Benutzer wird bei Überschreiten des entsprechenden Remissionswertes keine Glucosekonzentration mehr angezeigt und stattdessen wird der Benutzer zur wiederholten Probenaufgabe aufgefordert.

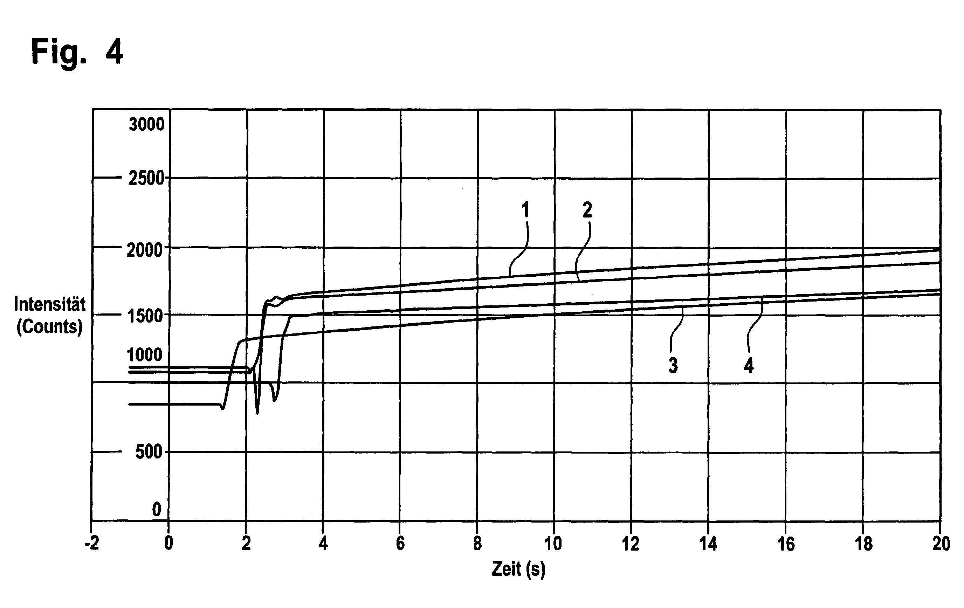

Fig. 4 veranschaulicht analog ein erfindungsgemäßes Verfahren zur Erkennung von Unterdosierung, das aufgrund einer Detektion von Fluoreszenz durchgeführt wird. Bevorzugte Ausführungsformen ergeben sich wie bereits beschrieben, so dass auch hier Schwellenwerte bestimmt werden können, bei deren Über/- Unterschreiten eine Korrektur des Meßwertes erfolgen muss bzw. die Ausgabe eines Meßwertes verweigert wird. Beispielsweise werden derartige Verfahren, die auf Fluoreszenzmessungen basieren bei der Bestimmung von Glucose in Blut verwendet.

Im gezeigten Beispiel ist das Testfeld eines Testelementes mit dem Fluorosphor, Fluorescein, als Kontrollsubstanz präpariert. Als analytspezifisches Reagenz zum Nachweis von Glucose enthält das Testfeld die Substanz NAD⁺. Durch Aufgabe einer Blutsprobe auf das Testfeld reagiert das Fluorophor mit dem in der Probe enthaltenen Wasser, so dass das Fluorescein als Kontrollsubstanz hydrolisiert wird.

Figur 4 zeigt den zeitlichen Verlauf der Fluoreszenzintensität nach dem Auftragen einer Blutsprobe auf das Testfeld und nach Bestrahlung des Testfeldes mit einer Anregungswellenlänge. Nach Kontakt mit der Probenmatrix verändert sich die Intensität der Fluoreszenz des Fluorescein aufgrund der Hydrolyse. Wird das Testfeld bei 485 nm bestrahlt, findet ausschließlich eine Anregung des hydrolisierten Fluorescein statt, sodass vom Testfeld nach ca. 1 Sekunde Fluoreszenzstrahlung im Bereich von > 570 nm emittiert wird. Vorteilhafterweise wird die Intensität der Fluoreszenz nach ca. 4 Sekunden nach Bestrahlung des Testfeldes gemessen. Es zeigt sich, dass die Intensität der Fluoreszenzstrahlung von der aufgegebenen Probenmenge abhängig ist, da nur der Teil der Kontrollsubstanz angeregt wird, der mit der Probenmatrix in Kontakt kam. Ist zu wenig Probe auf das Testfeld aufgegeben worden, wird das Fluorescein nicht vollständig hydrolisiert, sodass es zu einer verringerten Intensität der Fluoreszenz kommt. Es ist ein linearer Verlauf zwischen der Benetzung des Testfeldes mit Probe und der Fluoreszenzintensität gegeben. Unterscheiden sich die aufgegebenen Probenmengen nur geringfügig, wie am Kurvenverlauf 1 und 2 der Fig. 4 dargestellt ist, ergeben sich entsprechend geringfügige Unterschiede in der Fluoreszenzintesität. Wird die aufgegebene Probenmenge weiterhin reduziert (s. Kurvenverlauf 3 und 4) bedingt dieses eine entsprechenden Verringerung der Fluoreszenzintensität.

Ist der zeitliche Verlauf der Emission der Fluoreszenz nach Bestrahlung der Probe auf dem Testfeld bekannt, können die Messbedingungen entsprechend vorbestimmt werden, sodass von der Intensität der Fluoreszenz auf eine aufgegebenen Probenmenge geschlossen werden kann. Beispielsweise kann dieses verwirklicht werden, indem der Zeitpunkt der Messung stets 4 Sekunden nach Anregung der Kontrollsubstanz erfolgt. Von der gemessenen Fluoreszenzintensität bei bekannter Probenmenge kann dann auf die Probenmenge bei gemessener Fluoreszenzintensität geschlossen werden.

## Patentansprüche

1. Verfahren zur Ermittlung einer Konzentration eines Analyten beinhaltend
- Bestrahlung einer Probe in einem Kontroll-Wellenlängenbereich, die auf ein Testfeld eines Testelementes aufgegeben wurde, sodass mindestens ein Auswertungsbereich des Testfeldes von der Strahlung erfasst wird,
- wobei das Testfeld eine Kontrollsubstanz enthält, die mit einer Probenmatrix der Probe in der Weise wechselwirkt, dass die Kontrollsubstanz mit der elektromagnetischen Strahlung im Kontroll-Wellenlängenbereich in Abhängigkeit von dem Kontakt mit der Probenmatrix wechselwirkt,
- Detektion von Strahlung, die mit der Kontrollsubstanz wechselgewirkt hat, sodass ein Detektionswert generiert wird,
- Ermittlung der Probenmenge im Auswertungsbereich durch Vergleich der detektierten Strahlung mit einem vorbekannten Detektionswert der Kontrollsubstanz bei bekannter Probenmenge im Auswertungsbereich, wobei von der Probenmenge, die mit der Kontrollsubstanz in Kontakt kommt, auf die quantitative Probenmenge geschlossen wird und eine Konzentration des Analyten unter Berücksichtigung der detektierten Probenmenge ermittelt wird.

2. Verfahren gemäß Anspruch 1,
bei dem die Ermittlung der Probenmenge durch einen Vergleich der detektierten Strahlung mit einem Schwellenwert erfolgt, um eine Kontrolle durchzuführen, ob die im Auswertungsbereich vorliegenden Probenmenge einen Schwellenwert unter- oder überschreitet.

3. Verfahren gemäß Anspruch 1,
bei dem die Kontrollsubstanz im Kontroll-Wellenlängenbereich im Wesentlichen nicht mit der Strahlung wechselwirkt, wenn keine Probe den Auswertungsbereich bedeckt.

4. Verfahren gemäß Anspruch 1,
das zur Analyse eines Analyten in der Probe dient und ein analytspezifisches Reagenz im Testfeld mit dem Analyten in der Weise wechselwirkt, sodass in einem Detektions-Wellenlängenbereich ein Detektionswert in Abhängigkeit der Analytkonzentration detektiert wird.

5. Verfahren gemäß Anspruch 4,
bei dem die Kontrollsubstanz im Detektions-Wellenlängenbereich im Wesentlichen mit der Strahlung nicht wechselwirkt.

6. Testelement zur Detektion einer Probenmenge beinhaltend
- ein Testfeld mit einem analytspezifisches Reagenz, das mit einem Analyten einer Probe wechselwirkt, sodass bei Bestrahlung des Testfeldes in einem Detektions- Wellenlängenbereich das analytspezifisches Reagenz in Abhängigkeit von der Analytkonzentration mit der Strahlung wechselwirkt, sowie
- mit einer Kontrollsubstanz im Testfeld, die mit einer Probenmatrix der Probe wechselwirkt, sodass bei Bestrahlung des Testfeldes in einem Kontroll-Wellenlängenbereich die Kontrollsubstanz in Abhängigkeit von der auf dem Testfeld aufgegebenen Probenmenge mit der Strahlung quantitativ reproduzierbar wechselwirkt, wobei von der Probenmenge, die mit der Kontrollsubstanz in Kontakt kommt auf die Probenmenge geschlossen werden kann, die mit dem Reagenz wechselwirkt.

7. Testelement gemäß Anspruch 6,
bei dem die Kontrollsubstanz im Testelement eine luminiszierende Substanz ist.

8. Testelement gemäß Anspruch 6,
bei dem die Kontrollsubstanz ein Farbbildner ist.

9. Testelement gemäß Anspruch 8,
bei dem durch Kontakt mit der Probenmatrix ein Farbstoff gebildet wird, der im Kontroll-Wellenlängenbereich im Wesentlichen vollständig absorbiert, sobald die Probe im Wesentlichen vollständig den Auswertungsbereich bedeckt.

10. Testelement gemäß Anspruch 6,
bei dem die Kontrollsubstanz mit dem in der Probenmatrix enthaltendem Wasser reagiert.

11. Analysesystem zur Ermittlung der Probenmenge in einem Auswertungsbereich eines Testelementes gemäß eine der Ansprüch 6 - 10 beinhaltend
- eine Beleuchtungseinheit, die in einem Kontroll-Wellenlängenbereich Strahlung emittiert, in dem eine Kontrollsubstanz in Abhängigkeit von einem Kontakt mit einer Probenmatrix mit der Strahlung wechselwirkt, ein Detektor zur Detektion von Strahlung, die mit der Kontrollsubstanz wechselgewirkt hat, sodass ein Detektionswert generiert wird, eine Auswertungseinheit zur Ermittlung einer Probenmenge im Auswertungsbereich des Testfeldes durch Vergleich der detektierten Strahlung mit einem vorbekannten Detektionswert der Kontrollsubstanz bei bekannter Probenmenge im Auswertungsbereich, wobei von der Probenmenge, die mit der Kontrollsubstanz in Kontakt kommt, auf die Probenmenge quantitativ geschlossen wird, die mit dem Reagenz wechselwirkt und eine konzentration des Analyten unter Berücksichtigung der detektierten Probenmenge ermittelt wird.

12. Analysesystem gemäß Anspruch 11, mit einer Beleuchtungseinheit, die in mindestens zwei unterschiedlichen Wellenlängenbereichen Strahlung emittiert.

13. Analysesystem gemäß Anspruch 11,
bei dem ein Wellenlängenbereich im Bereich von 500 nm - 1000 nm oder im Bereich von 360 nm bis 500 nm liegt.

14. Analysesystem gemäß Anspruch 11,
das zur Bestimmung einer Glucosekonzentration verwendet wird.

15. Verfahren gemäß Anspruch 1,
das mit einem Analysesystem nach einer der Ansprüche 11-14 durchgeführt wird.

## Claims

1. Method for determining a concentration of an analyte comprising
- irradiating a sample that has been applied to a test field of a test element in a control wavelength range in such a manner that at least one evaluation area of the test field is detected by the radiation,
- wherein the test field contains a control substance which interacts with a sample matrix of the sample in such a manner that the control substance interacts with the electromagnetic radiation in the control wavelength range as a function of the contact with the sample matrix,
- detecting radiation that has interacted with the control substance to generate a detection value,
- determining the amount of sample in the evaluation area by comparing the detected radiation with a known detection value of the control substance for a known amount of sample in the evaluation area, wherein the quantitative amount of sample is deduced from the amount of sample which comes into contact with the control substance and a concentration of the analyte is determined taking into account the detected amount of sample.

2. Method as claimed in claim 1,
in which the amount of sample is determined by comparing the detected radiation with a threshold value in order to check whether the amount of sample present in the evaluation area is above or below a threshold value.

3. Method as claimed in claim 1,
in which the control substance does not substantially interact with the radiation in the control wavelength range when the evaluation area is not covered by the sample.

4. Method as claimed in claim 1,
which is used to analyse an analyte in the sample and an analyte-specific reagent in the test field interacts with the analyte in such a manner that a detection value in a detection wavelength range is detected as a function of the analyte concentration.

5. Method as claimed in claim 4,
in which the control substance does not substantially interact with the radiation in the detection wavelength range.

6. Test element for detecting an amount of sample comprising
- a test field with an analyte-specific reagent which interacts with an analyte in a sample such that the analyte-specific reagent interacts with the radiation as a function of the analyte concentration when the test field is irradiated in a detection wavelength range and
- comprising a control substance in the test field which interacts with a sample matrix of the sample such that the control substance quantitatively and reproducibly interacts with the radiation as a function of the amount of sample applied to the test field when the test field is irradiated in a control wavelength range, wherein the amount of sample that interacts with the reagent can be deduced from the amount of sample that comes into contact with the control substance.

7. Test element as claimed in claim 6,
in which the control substance in the test element is a luminescent substance.

8. Test element as claimed in claim 6,
in which the control substance is a colour former.

9. Test element as claimed in claim 8,
in which contact with the sample matrix results in the formation of a dye which essentially completely absorbs in the control wavelength range as soon as the evaluation area is essentially completely covered by sample.

10. Test element as claimed in claim 6,
in which the control substance reacts with the water present in the sample matrix.

11. Analytical system for determining the amount of sample in an evaluation area of a test element as claimed in one of the claims 6 - 10 comprising
- an illumination unit that emits radiation in a control wavelength range in which a control substance interacts with the radiation as a function of a contact with a sample matrix,
- a detector for detecting radiation that has interacted with the control substance to generate a detection value,
- an evaluation unit for determining an amount of sample in the evaluation area of the test field by comparing the detected radiation with a known detection value of the control substance for a known amount of sample in the evaluation area, wherein the quantitative amount of sample that interacts with the reagent is deduced from the amount of sample which comes into contact with the control substance and a concentration of the analyte is determined taking into account the detected amount of sample.

12. Analytical system as claimed in claim 11,
comprising an illumination unit that emits radiation in at least two different wavelength ranges.

13. Analytical system as claimed in claim 11,
in which the wavelength range is in the range of 500 nm - 1000 nm or in the range of 360 nm to 500 nm.

14. Analytical system as claimed in claim 11,
which is used to determine a glucose concentration.

15. Method as claimed in claim 1,
which is carried out using an analytical system as claimed in one of the claims 11-14.

## Revendications

1. Procédé pour la détermination d'une concentration d'un analyte, comprenant
- l'irradiation d'un échantillon dans une plage de longueurs d'ondes témoin, qui a été appliqué sur un champ d'essai d'un élément d'essai, de façon à enregistrer au moins une plage d'évaluation du champ d'essai à partir du rayonnement ;
- dans lequel le champ d'essai contient une substance témoin qui entre en interaction avec une matrice de l'échantillon de telle sorte que la substance témoin entre en interaction avec le rayonnement électromagnétique dans la plage de longueurs d'ondes témoin en fonction du contact avec la matrice de l'échantillon ;
- la détection du rayonnement qui est entrée en interaction avec la substance témoin, de façon à générer une valeur de détection ;
- la détermination de la quantité d'échantillon dans la plage d'évaluation par comparaison du rayonnement détecté à une valeur de détection de la substance témoin, connue au préalable, dans le cas d'une quantité d'échantillon connue dans la plage d'évaluation, une déduction quant à la quantité quantitative de l'échantillon étant faite à partir de la quantité d'échantillon qui entre en contact avec la substance témoin et une concentration de l'analyte étant déterminée en prenant en compte la quantité d'échantillon détectée.

2. Procédé selon la revendication 1,
dans lequel la détermination de la quantité d'échantillon a lieu via une comparaison du rayonnement détecté à une valeur seuil afin de procéder à un contrôle quant au fait de savoir si la quantité d'échantillon présente dans la plage d'évaluation dépasse une valeur seuil vers le bas ou vers le haut.

3. Procédé selon la revendication 1,
dans lequel la substance témoin dans la plage de longueurs d'ondes témoin n'entre essentiellement pas en interaction avec le rayonnement lorsqu'aucun échantillon ne recouvre la plage d'évaluation.

4. Procédé selon la revendication 1,
qui sert à l'analyse d'un analyte dans l'échantillon, un réactif spécifique à l'analyte entrant en interaction, dans le champ d'essai, avec l'analyte, de telle sorte que l'on détecte, dans une plage de longueurs d'ondes de détection, une valeur de détection en fonction de la concentration de l'analyte.

5. Procédé selon la revendication 4,
dans lequel la substance témoin dans la plage de longueurs d'ondes de détection n'entre essentiellement pas en interaction avec le rayonnement.

6. Élément d'essai pour la détection d'une quantité d'échantillon, comprenant
- un champ d'essai comprenant un réactif spécifique à un analyte, qui entre en interaction avec un analyte d'un échantillon, de telle sorte que, lors de l'irradiation du champ d'essai dans une plage de longueurs d'ondes de détection, le réactif spécifique à un analyte entre en interaction avec le rayonnement en fonction de la concentration de l'analyte, et
- comprenant une substance témoin dans le champ d'essai, qui entre en interaction avec une matrice de l'échantillon, de telle sorte que, lors de l'irradiation du champ d'essai dans une plage de longueurs d'ondes témoin, la substance témoin entre en interaction d'une manière quantitativement reproductible avec le rayonnement en fonction de la quantité d'échantillon appliquée sur le champ d'essai, une déduction pouvant être faite quant à la quantité de l'échantillon à partir de la quantité d'échantillon qui entre en interaction avec le réactif à partir de la quantité d'échantillon qui entre en contact avec la substance témoin.

7. Élément d'essai selon la revendication 6,
dans lequel la substance témoin dans l'élément d'essai est une substance luminescente.

8. Élément d'essai selon la revendication 6,
dans lequel la substance témoin est une substance chromogène.

9. Élément d'essai selon la revendication 8,
dans lequel, par contact avec la matrice de l'échantillon, un colorant se forme, qui absorbe de manière essentiellement complète dans la plage de longueurs d'ondes témoin, dès que l'échantillon recouvre de manière essentiellement complète la plage d'évaluation.

10. Élément d'essai selon la revendication 6,
dans lequel la substance témoin réagit avec l'eau que contient la matrice de l'échantillon.

11. Système d'analyse pour la détermination de la quantité d'un échantillon dans une plage d'évaluation d'un élément d'essai, selon l'une quelconque des revendications 6 à 10, comprenant
- une unité d'éclairage qui émet un rayonnement dans la plage de longueurs d'ondes témoin, dans lequel une substance témoin entre en interaction avec le rayonnement en fonction d'un contact avec une matrice d'échantillon ;
- un détecteur pour la détection du rayonnement qui est entré en interaction avec la substance témoin, pour générer une valeur de détection ;
- une unité d'évaluation pour la détermination d'une quantité d'échantillon dans la plage d'évaluation du champ d'essai par comparaison du rayonnement détecté à une valeur de détection connue au préalable, de la substance témoin, dans le cas d'une quantité d'échantillon connue dans la plage d'évaluation, une déduction quantitative étant faite en ce qui concerne la quantité de l'échantillon qui entre en interaction avec le réactif à partir de la quantité de l'échantillon qui entre en contact avec la substance témoin et une concentration de l'analyte étant déterminée en prenant en compte la quantité d'échantillon détectée.

12. Système d'analyse selon la revendication 11,
comprenant une unité d'éclairage qui émet un rayonnement dans au moins deux plages de longueurs d'ondes différentes.

13. Système d'analyse selon la revendication 11,
dans lequel une plage de longueurs d'ondes se situe dans la plage de 500 nm à 1000 nm ou dans la plage de 360 nm à 500 nm.

14. Système d'analyse selon la revendication 11,
qui est utilisé pour la détermination d'une concentration de glucose.

15. Procédé selon la revendication 1,
qui est mis en oeuvre avec un système d'analyse selon l'une quelconque des revendications 11 à 14.
